Europäisches Patentamt

European Patent Office

Office européen des brevets

(11) Veröffentlichungsnummer: **0 108 900 B1**

# (12) EUROPÄISCHE PATENTSCHRIFT

(45) Veröffentlichungstag der Patentschrift:
09.04.86

(21) Anmeldenummer: 83109614.4

(22) Anmeldetag: 27.09.83

(51) Int. Cl.⁴: **C 03 B 27/04, C 03 B 35/20**

(54) Vorrichtung zum Vorspannen einer Glasscheibe.

(30) Priorität: 14.10.82 DE 3238043

(43) Veröffentlichungstag der Anmeldung:
23.05.84 Patentblatt 84/21

(45) Bekanntmachung des Hinweises auf die Patenterteilung:
09.04.86 Patentblatt 86/15

(84) Benannte Vertragsstaaten:
AT BE CH FR GB IT LI LU NL SE

(56) Entgegenhaltungen:
EP - A - 0 003 391
DE - C - 848 237
GB - A - 1 307 752
US - A - 3 162 520
US - A - 4 071 346
US - A - 4 314 836
US - A - 4 343 645

(73) Patentinhaber: FLACHGLAS AKTIENGESELLSCHAFT,
Otto-Seeling-Promenade 10-14, D-8510 Fürth (DE)

(72) Erfinder: Sittka, Horst. Ing.-grad., An Neuen Busch 19,
D-4230 Wesel (DE)
Erfinder: Eckardt, Rudolf, Ing.-grad., Am Lilienveen 12-2,
D-4230 Wesel (DE)
Erfinder: Neuendorf, Christoph, Ing.-grad.,
Grünstrasse 82 b, D-4230 Wesel (DE)

(74) Vertreter: Andrejewski, Walter et al, Patentanwälte
Andrejewski, Honke & Partner
Postfach 10 02 54 Theaterplatz 3, D-4300 Essen 1 (DE)

## Beschreibung

Die Erfindung bezieht sich gattungsgemäß auf eine Vorrichtung zum Vorspannen einer erwärmten, gebogenen Glasscheibe durch Kühlen, - mit oberem Blaskasten, unterem Blaskasten, Beschickvorrichtung und Entleervorrichtung, wobei die Blaskästen eine Mehrzahl von auf die vorzuspannende Glasscheibe gerichteten Kühlluftdüsen aufweisen sowie die vorzuspannende Glasscheibe mit Hilfe der Beschickvorrichtung zwischen den Blaskästen ablegbar sowie mit Hilfe der Entleervorrichtung abführbar ist. Es versteht sich, daß die Blaskästen aufeinanderzu bewegbar sind, z. B. der obere Blaskasten heb- und senkbar ist. Beschickvorrichtung meint das gesamte Aggregat, welches zur Beschickung der erfindungsgemäßen Vorrichtung mit zu härtenden Glasscheiben eingerichtet ist. Die Beschickvorrichtung weist Elemente auf, die zwischen die Blaskästen einfahrbar sind. Entsprechend bezeichnet Entleervorrichtung eine Transportvorrichtung, die es erlaubt, die erfindungsgemäße Vorrichtung nach Vorspannen einer Glasscheibe zu entleeren, wenn der Vorspannvorgang abgeschlossen ist. Dazu müssen Elemente der Entleervorrichtung die vorgespannte Glasscheibe erfassen, sich mit der Glasscheibe aus dem Bereich der Blaskästen herausbewegen und die Glasscheibe der weiteren Bearbeitung oder Verwendung zuführen. Sowohl für die Beschickung als auch für die Entleerung sind antriebstechnische Maßnahmen und steuerungstechnische Maßnahmen erforderlich, die die reine Kinematik der Zusammenhänge sicherstellen, beispielsweise dafür sorgen, daß vorzuspannende Glasscheiben nacheinander in die erfindungsge-mäße Vorrichtung eingeführt und vorgespannte, gleichsam im Wechseltakt dazu, aus der erfindungsgemäßen Vorrichtung herausgenommen werden. Derartige antriebstechnische und steuerungstechnische Maßnahmen sind in den verschiedensten Bereicheder Technik an sich und für sich bekannt und werden daher in der vorliegenden Anmeldung im Detail nicht beschrieben. Gegenstand der Erfindung sind in Verbindung mit der Beschickung sowie der Entleerung besondere Aggregate, die die Beschickvorrichtung bzw. die Entleervorrichtung ergänzen und es darüber hinaus in Kombination mit anderen ermöglichen, das Vorspannen der vorzuspannenden Glasscheiben sehr definiert durchzuführen.

Bei der bekannten gattungsgemäßen Vorrichtung (Europäische Patentpublikation 0 003 391) liegt die vorzuspannende Glasscheibe beim Aufblasen der Kühlluft auf einem der Beschickvorrichtung angehörenden Formring, der später gegen einen Transportring gewechselt wird, welcher seinerseits auch der Entleervorrichtung angehört. Beim Ringwechsel wird die Glasscheibe durch die aus dem unteren Blaskasten austretende Kühlluft vom Formring abgehoben und gegen Anschläge am oberen Blaskasten gedrückt. Beim Kühlvorgang liegt die zu härtende Glasscheibe auf dem Formring frei. Sie kann sich durch Abkühlungsspannungen unkontrolliert verformen, was insbesondere die optische Qualität der Glasscheiben erheblich beeinträchtigt. Im übrigen können unkontrollierte und beim Vorspannen nicht rückbildbare Verformungen auch während des Beschickvorganges auftreten, bei dem im Rahmen der bekannten Maßnahmen die leicht verformbare Glasscheibe auf dem Formring aufliegt. Maßnahmen, die geeignet sind, die Vorspannung so zu führen, daß in der vorgespannten Glasscheibe die gleichsam eingefrorenen Spannungen ein besonderes, definiertes Spannungsmuster bilden, fehlen.

Der Erfindung liegt die Aufgabe zugrunde, eine gattungs-gemäße Vorrichtung so weiter auszubilden, daß die Glasscheibe weder beim Beschickvorgang, noch während der Vorspannung störende, unkontrollierte Verformungen erfährt. Darüber hinaus soll die Möglichkeit geschaffen werden, besondere Vorspannungsmuster zu erzeugen, die die vorgespannten Glasscheiben für spezielle Verwendungen und Einsatzfälle besonders geeignet machen.

Zur Lösung dieser Aufgabe lehrt die Erfindung, daß die Beschickvorrichtung zumindest ein zwischen die Blaskästen einfahrbares Beschickblech aufweist, welches als Vorspannmuster-Lochschablone zur Erzeugung von Vorspannfeldern in der Glasscheibe ausgebildet ist sowie der Form der gebogenen Glasscheibe entspricht, die auf dem Beschickblech aufliegt, daß bei eingefahrenem Beschiekblech auf den Rand der vorzuspannenden Glasscheibe ein Halterahmen aufsetzbar ist und die Glasscheibe dadurch einspannbar ist und daß die eingespannte Glasscheibe zumindest über die Kühlluftdüsen des unteren Blaskastens beblasbar ist. - Die Erfindung nutzt die Tatsache, daß die Vorspannungsmuster-Lochschablone, die ein bestimmtes Lochmuster aufweist, geeignet ist, in einer vorzuspannenden Glasscheibe ein bestimmtes Vorspannmuster zu erzeugen, wenn in der angegebenen Weise der Vorspannmuster-Lochschablone gleichsam vorgeschaltete Kühlluftdüsen Kühlluft gegen die Vorspannmuster-Lochschablone und die aufliegende Glasscheibe richten. Dabei muß Vorsorge getroffen werden, daß sich die vorzuspannende Glasscheibe gegenüber der Vorspannmuster-Lochschablone während des Kühlvorganges nicht verschiebt, was mit Hilfe des Halterahmens geschieht. Die Erfindung geht fernerhin von der Erkenntnis aus, daß eine solche Vorspannmuster-Lochschablone zugleich als Beschickblech der Beschickvorrichtung arbeiten und folglich dazu dienen kann, eine vorzuspannende Glasscheibe in einer anderen Station aufzunehmen und der Vorspannstation zuzuführen. Das hat den Vorteil, daß sich die erwärmte, bereits gebogene Glasscheibe beim Beschickvorgang nicht verformt. Der Halterahmen, der zunächst dazu dient, die vorzuspannende Glasscheibe gegenüber der Vorspannmuster-Lochschablone beim Vorspannvorgang zu fixieren, kann umgekehrt zugleich als Element der Entleereinrichtung arbeiten. - Lochbleche sind als Form zum Biegen von Glasscheiben seit langem bekannt (DE-PS 848 237 aus 1952). Dabei ist auch bereits vorgeschlagen worden, Luft oder andere Kühlmittel auf die mit Hilfe des Lochbleches gebogene Glasscheibe aufzublasen. Offenbar ist jedoch nicht erkannt worden, daß bei geeigneter Lochverteilung das Lochblech als Vorspannmuster-Lochschablone dienen und definierte Vorspannfelder in der vorzuspannenden Glasscheibe erzeugen kann. Das folgt auch aus der Tatsache, daß im Rahmen der bekannten Maßnahmen neben einem Lochblech alternativ Metallgitter und Metallgeflechte als Form zum Biegen der Glasscheiben vorgeschlagen worden sind und solche Metallgitter oder Metallgeflechte den Effekt der Vorspannmustererzeugung, vermutlich wegen unkontrollierter Turbulenzbildung, nicht zeigen. Jedenfalls heben die bekannten Maßnahmen zur Lösung der Erfindungsaufgabe nicht beigetragen.

Wenn mit Hilfe einer erfindungsgemäßen Vorrichtung besonders definierte Vorspannmuster erzeugt werden sollen, so empfiehlt es sich, die Anordnung so zu treffen, daß die Kühlluftdüsen des unteren Blaskastens und/oder die des oberen Blaskastens mit ihren Mündungen den Löchern der Vorspannmuster-Lochschablone entsprechend angeordnet sind. Tatsächlich erzielt man auch dann ein definiertes, durch die Lochverteilung vorgegebenes Vorspannmuster, wenn nicht nur die Kühlluftdüsen des unteren Blaskastens in der beschriebenen Weise zum Zwecke des Vorspannens die vorzuspannende Glasscheibe kühlen. Tatsächlich tragen auch die Kühldüsen des oberen Blaskastens bei Einsatz von Vorspannmuster-Lochschablonen im Sinne der Erfindung zur Erzeugung der Vorspannfelder bei.

Um den Halterahmen als Element oder Aggregat der Entleervorrichtung arbeiten zu lassen, empfiehlt die Erfindung, daß der Halterahmen Klemm- und/oder Saugvorrichtungen aufweist und die Glasscheibe dadurch festhaltbar ist, während die dadurch freigekommene Vorspannmuster-Lochschablone zur Aufnahme einer weiteren, vorzuspannenden Glasscheibe aus dem Blaskastenbereich herausbewegbar ist, und daß die am Halterahmen festgehaltene Glasscheibe mit Hilfe der Kühlluftdüsen weiter beblasbar ist. Sie kann auch durch Kühlluft des unteren Blaskastens gegen den Halterahmen gedrückt werden. Wird die Kühlung der Glasscheibe nach Entfernung der Vorspannmuster-Lochschablone fortgesetzt, so läßt sich der Gradient der mechanischen Spannungen in den verschiedenen Vorspannfeldern beeinflussen und auf spezielle Einsatzfälle der vorgespannten Glasscheiben abstimmen. Dazu trägt auch bei, daß nach einem weiteren Vorschlag der Erfindung zumindest einer der Blaskästen und/oder der Halterahmen beim Blasvorgang oszillierbar sind. Der Halterahmen ist jedenfalls zusätzlich Transportelement der Entleervorrichtung und die vorgespannte Glasscheibe ist mit Hilfe des Halterahmens einer nachgeschalteten Bearbeitungsstation zuführbar.

Im folgenden wird die Erfindung anhand einer lediglich ein Ausführungsbeispiel darstellenden Zeichnung ausführlicher erläutert; es zeigen in schematischer Darstellung

Fig. 1 eine Anlage zum Vorspannen einer Glasscheibe mit erfindungsgemäßer Vorrichtung in Seitenansicht,

Fig. 2 in gegenüber der Fig. 1 wesentlich vergrößertem Maßstab die Vorrichtung aus dem Gegenstand nach Fig. 1 nach dem Einbringen einer vorzuspannenden Glasscheibe,

Fig. 3 den Gegenstand nach Fig. 2 beim Kühlen der zwischen Vorspannmuster-Lochschablone und Halterahmen eingespannten Glasscheibe,

Fig. 4 den Gegenstand nach Fig. 3 in anderer Funktionsstellung - nämlich bei entfernter Vorspannmuster-Lochschablone und

Fig. 5 den Abtragsport einer vorgespannten Glasscheibe aus einer erfindungsgemäßen Vorrichtung.

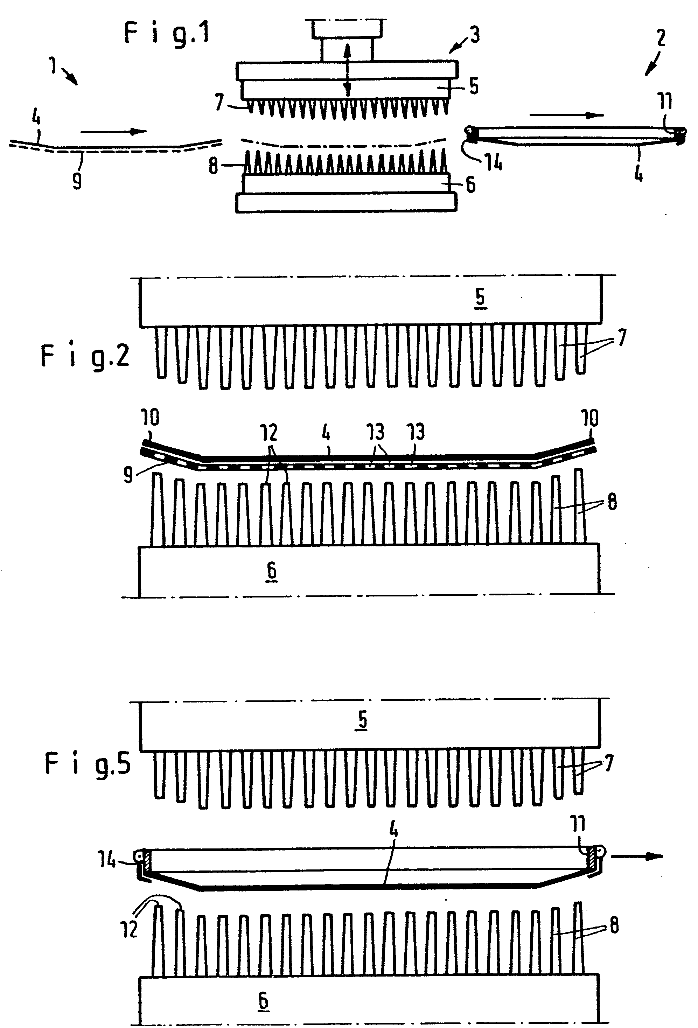

Die in Fig. 1 dargestellte Anlage dient zum Vorspannen von erwärmten, gebogenen Glasscheiben. Zur Anlage gehört eine Beschickvorrichtung 1 und eine Entleervorrichtung 2 sowie die eigentliche Vorrichtung 3 zum Vorspannen der gebogenen Glasscheibe 4, die einen oberen Blaskasten 5 und einen unteren Blaskasten 6 aufweist, wobei nur der obere Blaskasten 5 aufundniederbewegbar ist. Die Blaskästen 5, 6 besitzen eine Mehrzahl von auf die vorzuspannende Glasscheibe 4 gerichteten Kühlluftdüsen 7, 8. Die vorzuspannende Glasscheibe 4 ist mit Hilfe der Beschickvorrichtung 1 zwischen die Blaskästen 5, 6 einbringbar sowie mit Hilfe der Entleervorrichtung 2 im vorgespannten Zustand abführbar. Im Bedarfsfall kann die Glasscheibe 4 zwischen den Blaskästen 5, 6 außerdem durch die Kühlluft manipulierbar sein.

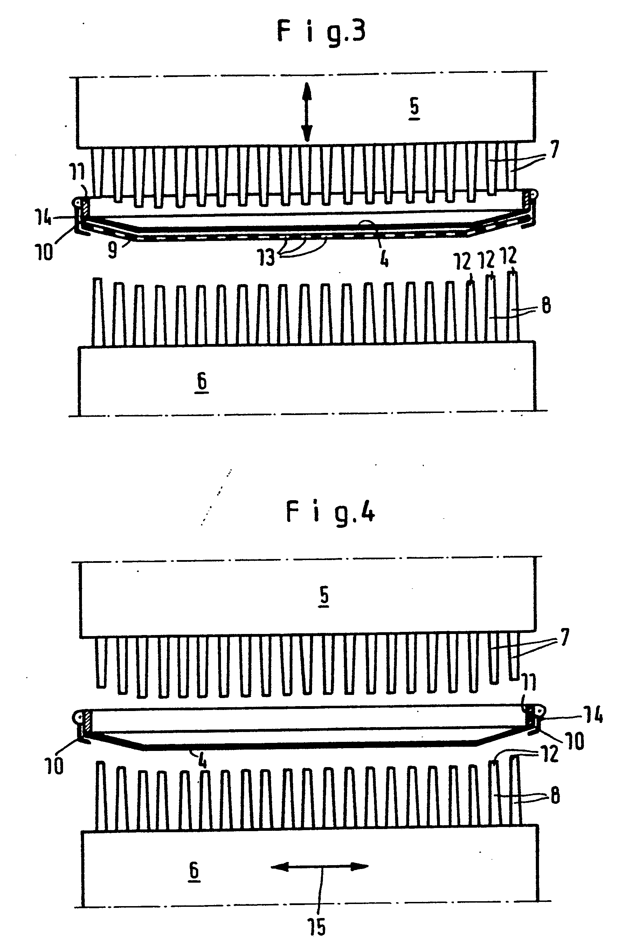

Zur Beschickvorrichtung 1 gehört zumindest ein zwischen die Blaskästen 5, 6 einfahrbares Beschickblech 9. Mit Hilfselementen, die nicht gezeichnet wurden, wird eine vorzuspannende Glasscheibe 4 in einem Bereich vor den Blaskästen 5, 6 dem Beschickblech 9 aufgegeben. Insbesondere aus den Fig. 2 und 3 entnimmt man, daß das Beschickblech 9 als Vorspannmuster-Lochschablone 9 zur Erzeugung von Vorspannfeldern in der Glasscheibe 4 ausgebildet ist. Seine Form entspricht der Form der gebogenen Glasscheibe 4. Diese liegt also gleichsam passend auf dem Beschickblech 9 auf. Bei eingefahrenem Beschickblech 9 kann auf den Rand 10 der vorzuspannenden Glasscheibe 4 ein Halterahmen 11 aufgesetzt werden, und im Ergebnis ist die Glasscheibe 4 dann zwischen Vorspannmuster-Lochschablone bzw. Beschickblech 9 und Halterahmen 11 eingespannt. Insoweit wird auf die Fig. 3 verwiesen. Die eingespannte Glasscheibe 4 ist zumindest über die Kühlluftdüsen 8 des unteren Blaskastens 6 beblasbar. Im Ausführungsbeispiel und nach bevorzugter Ausführungsform der Erfindung sind die Kühlluftdüsen 8 des unteren Blaskastens 6 und/oder die Kühlluftdüsen 7 des oberen Blaskastens 5 mit ihren Mündungen 12 den Löchern 13 der Vorspannmuster-Lochschablone 9 entsprechend angeordnet. Der Halterahmen 11 besitzt Klemm- und/oder Saugvorrichtungen 14. Die Glasscheibe 4 ist damit am Halterahmen 11 festhaltbar, wie es die Fig. 1, 4 und 5 zeigen. Um dieses Festhalten durchzuführen, könnte die Glasscheibe 4 auch durch den Luftdruck der Kühlluft, die aus den unteren Kühlluftdüsen, 8 austritt, zunächst unter den Halterrahmen 11 gedrückt werden, so daß randseitig umfassende Klammern 14 betätigt werden können. Der Halterahmen 11 kann aber auch die Glasscheibe 4 durch Saugvorrichtungen festhalten. Jedenfalls kann die am Halterahmen 11 festgehaltene Glasscheibe 4 mit Hilfe der Kühlluftdüsen 7, 8 weiter beblasen werden, während das Beschickblech 9 von der Beschickvorrichtung 1 wieder aufgenommen und zur Aufnahme einer neuen vorzuspannenden Glasscheibe 4 zurückbewegt wird. Durch Doppelpfeile 15 wurde angedeutet, daß einer der Blaskästen 5, 6 bzw. der Halterahmen 11 beim Blasvorgang auch oszillierend hindurchbewegbar sein können. - Die Fig. 5 macht deutlich, wie der Halterahmen 11, der gleichzeitig Transportrahmen der Entleervorrichtung 5 ist, eine vorgespannte Glasscheibe 4 aus dem Blaskastenbereich heraus und der weiteren Bearbeitung zuführt.

**Patentansprüche:**

1. Vorrichtung zum Vorspannen einer erwärmten, gebogenen Glasscheibe (4) durch Kühlen, - mit

oberem Blaskasten (5), unterem Blaskasten (6), Beschickvorrichtung (1) und Entleervorrichtung (2),

wobei die Blaskästen (5,6) eine Mehrzahl von auf die vorzuspannende Glasscheibe (4) gerichteten Kühlluftdüsen (7, 8) aufweisen sowie die vor zuspannende Glasscheibe (4) mit Hilfe der Beschickvorrichtung (1) zwischen den Blaskästen ablegbar sowie mit Hilfe der Entleervorrichtung abführbar ist, dadurch gekennzeichnet, daß die Beschickvorrichtung (1) zumindest ein zwischen die Blaskästen (5, 6) einfahrbares Beschickblech aufweist,

welches als Vorspannmuster-Lochschablone (9) zur Erzeugung von Vorspannfeldern in der Glasscheibe (4) ausgebildet ist sowie der Form der gebogenen Glasscheibe (4) entspricht, die auf dem Beschickblech (9) aufliegt,

daß bei eingefahrenem Beschickblech (9) auf den Rand (10) der vorzuspannenden Glasscheibe

(4) ein Halterahmen (11) aufsetzbar und die Glasscheibe (4) dadurch einspannbar ist, und daß die eingespannte Glasscheibe (4) zumindest über die Kühlluftdüsen (8) des unteren Blaskastens (6) beblasbar ist.

2. Vorrichtung nach Anspruch 1, dadurch gekennzeichnet, daß die Kühlluftdüsen (8) des unteren Blaskastens (6) und/oder die Kühlluftdüsen (7) des oberen Blaskastens (5) mit ihren Mündungen (12) den Löchern (13) der Vorspannmuster-Lochschablone (9) entsprechend angeordnet sind.

3. Vorrichtung nach einem der Ansprüche 1 oder 2, dadurch gekennzeichnet, daß der Halterahmen (11) Klemm- und/oder Saugvorrichtungen (14) aufweist und die Glasscheibe (4) damit festhaltbar ist, daß die dadurch freikommende Vorspannmuster-Lochschablone (9) zur Aufnahme einer weiteren, vorzuspannenden Glasscheibe (4) aus dem Blaskastenbereich herausbewegbar ist, und daß die am Halterahmen (11) festgehaltene Glasscheibe (4) mit Hilfe der Kühlluftdüsen (7, 8) weiter beblasbar ist.

4. Vorrichtung nach einem der Ansprüche 1 bis 3, dadurch gekennzeichnet, daß zumindest einer der Blaskästen (5, 6) und/oder der Halterahmen (11) beim Blasvorgang oszillierbar sind.

**Claims**

1. Equipment for toughening by cooling a heated, bent glass sheet (4) - with
an upper blowing box (5), a lower blowing box (6), a loading appliance (1) and an unloading appliance (2),
in which the blowing boxes (5, 6) possess a plurality of cold air nozzles (7, 8) directed against the glass sheet (4) that is to be toughened, which glass sheet (4) is positionable between the blowing boxes by means of the loading appliance (1) and is removable by means of the unloading appliance (2), characterized in that the loading appliance (1) possesses at least one loading sheet movable in between the blowing boxes (5, 6),
which to produce the toughened areas in the glass sheet (4) is formed as a toughened pattern hole template (9) and corresponds to the shape of the bent glass sheet (4) that lies on the loading sheet (9),
that when the loading sheet (9) is moved into position a holding frame (11) is lowerable on to the edge (10) of the glass sheet (4) that is to be toughened and the glass sheet (4) is thereby clamped, and the clamped glass sheet (4) is blown upon at least by the cold air nozzles (8) of the lower blowing box (6).

2. Equipment according to Claim 1, characterized in that the cold air nozzles (8) of the lower blowing box (6) and/or the cold air nozzles (7) of the upper blowing box (5) have their outlets (12) positioned in accordance with the holes (13) of the toughening pattern hole template (9).

3. Equipment according to one of Claims 1 or 2, characterized in that the holding frame (11) possesses clamping and/or suction appliances (14) and the glass sheet (4) is thereby firmly held, that the toughening pattern hole template (9) that is consequently released is movable away from the region of the blowing boxes to receive a further glass sheet (4) to be toughened, and that the glass sheet (4) firmly held on the holding frame (11) is further blown upon by means of the cold air nozzles (7, 8).

4. Equipment according to one of Claims 1 to 3, characterized in that at least one of the blowing boxes (5, 6) and/or the holding frame (11) is oscillatable during blowing.

## Revendications

1. Appareil pour tremper une feuille de verre (4) chauffée et coudée, par refroidissement, - comportant une boite de soufflage supérieure (5), une boîte de soufflage inférieure (6), un dispositif de chargement (1) et un dispositif de déchargement (2) - et dans lequel les boîtes de soufflage (5,6) comportent une multiplicité de buses d'air de refroidissement (7,8) dirigées vers la feuille de verre (4) devant être trempée, et la feuille de verre (4) devant être trempée peut être déposée à l'aide du dispositif de chargement (i) entre les boites de soufflage et peut être évacuée à l'aide du dispositif de déchargement, caractérisé en ce que le dispositif de chargement (1) comporte au moins une tôle de chargement qui peut être introduite entre les boîtes de soufflage (5,6) et qui est réalisée sous la forme d'un gabarit perforé (9) déterminant un modèle de trempe et servant à produire des zones trempées dans la feuille de verre (4), et correspond à la forme de la feuille de verre coudée, qui est en appui sur la tôle de chargement (9), que, lorsque la tôle de chargement (9) est en position introduite, un cadre de support (11) peut être apposé sur le bord (10) de la feuille de verre (4) devant être trempée et qu'une action de soufflage peut être appliquée à la feuille de verre (4) serrée, au moins par l'intermédiaire des buses d'air de refroidissement (8) de la boite de soufflage inférieure (6).

2. Appareil selon la revendication 1, caractérisé en ce que les buses d'air de refroidissement (6) de la boîte de soufflage inférieure (6) et/ou les buses d'air de refroidissement (7) de la boÂte de soufflage supérieure (5) sont disposées de manière que leurs orifices (12) correspondent aux trous (13) du gabarit perforé (9) déterminant un modèle de trempe.

3. Appareil selon l'une des revendications 1 ou 2, caractérisé en ce que le cadre de support (11) comporte des dispositifs de serrage et/ou d'aspiration (14) et que la feuille de verre (4) peut être retenue par ces dispositifs, que le gabarit perforé (9) determinant un modèle de trempe, qui est de ce fait libére, peut être retiré hors de la zone des boîtes de soufflage, de manière à permettre la réception d'une autre feuille de verre (4) devant être trempée, et que la feuille de verre (4) retenue sur le cadre de support (il) peut être à nouveau soumise à une action de soufflage au moyen des buses d'air de refroidissement (7,5).

4. Appareil selon l'une des revendications 1 à 3, caractérisé en ce qu'au moins l'une des boîtes de soufflage (5,6) et/ou le cadre de maintien (11) peuvent être entraînés en oscillations lors de l'opération de soufflage.

Fig.1

Fig.2

Fig.5

# F i g.3

# F i g.4